(19) Europäisches Patentamt
European Patent Office
Office européen des brevets

(11) **EP 1 387 874 B1**

(12) **EUROPEAN PATENT SPECIFICATION**

(45) Date of publication and mention
of the grant of the patent:
**25.07.2007 Bulletin 2007/30**

(51) Int Cl.:
***C09J 7/02*** (2006.01)

(21) Application number: **02746403.1**

(22) Date of filing: **16.05.2002**

(86) International application number:
**PCT/US2002/015677**

(87) International publication number:
**WO 2002/092712 (21.11.2002 Gazette 2002/47)**

(54) **ADHESIVE COMPOSITION AND ADHESIVE ARTICLE**

KLEBSTOFFZUSAMMENSETZUNG UND KLEBEGEGENSTAND

COMPOSITION ADHESIVE ET ARTICLE ADHESIF

(84) Designated Contracting States:
**AT BE CH CY DE DK ES FI FR GB GR IE IT LI LU MC NL PT SE TR**

(30) Priority: **17.05.2001 JP 2001147697**

(43) Date of publication of application:
**11.02.2004 Bulletin 2004/07**

(73) Proprietor: **3M Innovative Properties Company St. Paul, MN 55133-3427 (US)**

(72) Inventor: **ABE, Hidetoshi Tendo-city, Yamagata 994-0047 (JP)**

(74) Representative: **Vossius & Partner Siebertstrasse 4 81675 München (DE)**

(56) References cited:
**US-A- 5 223 645**

• **PATENT ABSTRACTS OF JAPAN vol. 2000, no. 07, 29 September 2000 (2000-09-29) & JP 2000 119624 A (MINNESOTA MINING &MFG CO <3M>), 25 April 2000 (2000-04-25) cited in the application**

**Description**

The present invention relates to the improvement of an adhesive composition comprising a self-adherent polymer and a crystalline polymer, in particular, an adhesive composition usable as an adhesive, in which a self-adherent polymer can be photo-crosslinked.

An adhesive comprising a self-adherent polymer as a main component can be used as pressure-sensitive adhesives (tackifiers), and can be easily and firmly adhered to materials by simply applying a pressure to the adhesives. Therefore, adhesive articles such as adhesive sheets, at least one main surface of which has an adhesive layer comprising such adhesives, is easily adhered to an adherent, and such adhesion steps can be performed manually. For example, US-A-4,737,559, US-A-4,847,137, US-A-5,552,451 and US-A-5,648,425 disclose a photo-crosslinkable pressure sensitive adhesive comprising a polymer obtained by polymerizing a monomer mixture of acryloyloxybenzophenone, an alkyl acrylate and an unsaturated fatty acid.

An adhesive containing a self-adherent polymer and a crystalline polymer is also known. For example, US-A-5,192,612 (corresponding to JP-B-3021646) discloses a pressure-sensitive composition comprising a pressure-sensitive adhesive base resin (a self-adherent polymer such as an acrylic polymer), a detackifying resin and a detackifying particulate. A specific preferable example of the detackifying resin is substantially linear polycaprolactone having a molecular weight of about 3,000 to about 342,000. Polycaprolactone is a crystalline polymer which exhibits non-tackifying properties at room temperature (about 15 to 30°C). The above-described pressure-sensitive adhesive can be adhered to an adherent by pressing the adhesive against the adherent.

The above detackifying resin and the detackifying particles (e.g. inorganic particles such as silica) effectively reduce tack on the surface of the adhesive at room temperature and improve repeelability to facilitate the positioning of an article in the adhering step. In the above US Patent, it is not supposed that the adhesive material is peeled (including thermal peeling) during or after the use of the adhesive material after the final adhesion.

JP-A-2000-119624 discloses an adhesive composition comprising a specific self-adherent polymer and crystalline polycaprolactone. Using the disclosed adhesive composition, an article can be adhered to an adherent by heat pressing (pressing after heating or pressing while heating). It is essential for the disclosed self-adherent polymer to have two functional groups, that is, a hydroxyl group and a phenyl group, in the molecule, and the compatibility with polycaprolactone is improved by the functions of these functional groups. With such an adhesive, the tack on the adhesion surface at room temperature (about 25°C) can be avoided with the function of the crystalline polymer having the polyol units such as polycaprolactone in the molecule.

US-A-5,412,035 (=JP-A-6-510548) discloses an adhesive composition (pressure sensitive adhesive) which becomes pressure sensitive at least at one temperature in the range between 20°C and 40°C, and comprises a polymeric pressure-sensitive adhesive component (self-adherent polymer) and a crystalline polymer The crystalline polymer is usually non-tacky at room temperature and intimately mixed with the polymeric pressure-sensitive adhesive component. The melting point $T_m$ (°C) of the crystalline polymer, which is measured in the composition, is lower than the melting point $T_m$ (°C) of the crystalline polymer as such, and the difference $T_m-T_a$ is preferably from 1°C to 9°C. In the above US patent, $T_m$ is preferably from 20°C to 102°C.

With the adhesive composition, a peel strength $P_2$ (g/cm) at a certain temperature higher than $T_m$ is smaller than a peel strength $P_1$ (g/cm) at a certain temperature lower than $T_m$.

Meanwhile, the conventional thermally peelable adhesives have the following problems: When an adherent, that is, an adhesive article adhered, has a relatively large adherent surface, for example, 1 m$^2$ or larger, it is difficult to heat the entire article with usual heating apparatus (e.g. a drier, etc.) at the same time. For example, in the case of an adhesive sheet for a signboard with a large area or a decoration of an automobile, it is difficult to heat the entirety, of the adhesive sheet on site at the same time. Thus, after heating one part, other part should be heated. However, while the other part is heated, the one part which has been heated is cooled and returned to the original state in which the sheet is difficult to peel. Therefore, the peeling work may become trobleasome.

Briefly, in one aspect of the present invention an adhesive is provided comprising comprising (I) a crystalline polymer and (II) a self-adherent polymer compatible with said crystalline polymer at a temperature equal to or higher than the melting point of said crystalline polymer characterized in that said self-adherent polymer has (a) a photo-crosslinkable functional group, (b) a carboxyl group and (c) an alkyl group having 4 to 8 carbon atoms in the molecule.

The present invention relates to the improvement of an adhesive composition comprising a self-adherent polymer and a crystalline polymer, in particular, an adhesive composition usable as an adhesive, in which a self-adherent polymer can be photo-crosslinked, with which adherents can be easily adhered after the crosslinking of the self-adherent polymer, and one adherent can be peeled from the other through heating (that is, thermally peelable). The term "thermal peeling property" means a property such that an adherent can be peeled by heating.

An adhesive article having the thermally peelable adhesive of the present invention as an adhesive layer is particularly suitably used in the fields of decoration, signs, electronic parts, etc. The adhesive articles of the present invention include the forms of adhesive sheets, adhesive films and adhesive tapes.

Accordingly, one object of the present invention is to provide an adhesive composition useful as an adhesive precursor for forming a thermally peelable adhesive which can facilitate the peeling of an article from an adherent on site even when an article adhered (e.g. an adhesive sheet, etc.) has a relatively large adherent surface.

To achieve the above object, the present invention provides an adhesive composition with a thermal peeling property comprising (I) a crystalline polymer and (II) a self-adherent polymer compatible with said crystalline polymer at a temperature equal to or higher than the melting point of said crystalline polymer characterized in that said self-adherent polymer has (a) a photo-crosslinkable functional group (b) a carboxyl group and (c) an alkyl group having 4 to 8 carbon atoms in the molecule. .

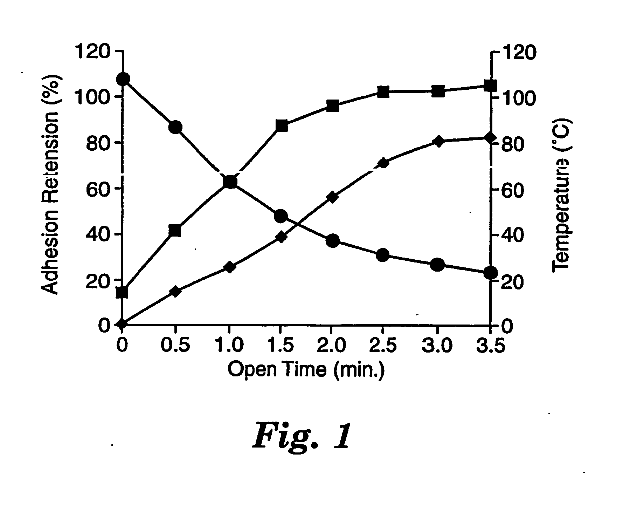

Fig. 1 is a graph showing the retention of adhesive force of the adhesive sheet produced in Example 1 and Comparative 1 together with temperature.

The adhesive composition of the present invention comprises (I) a crystalline polymer and (II) a self-adherent polymer compatible with said crystalline polymer at a temperature equal to or higher than the melting point of said crystalline polymer, and is characterized in that the self-adherent polymer has (a) a photo-crosslinkable functional group (b) a carboxyl group and (c) an alkyl group having 4 to 8 carbon atoms in the molecule.

The self-adherent polymer is compatible with the crystalline polymer at a temperature equal to or higher than the melting point of the crystalline polymer. Thus, such an adhesive composition has a good thermal peeling property.

The crosslinking of the self-adherent polymer can effectively extend the peelable time of the thermally peelable adhesive (a time in which a peeling-easy state continues after terminating heating). Since the self-adherent polymer is photo-crosslinkable in the adhesive composition of the present invention, a crosslinking reaction is completed in a shorter time (usually one minute or less) than a thermal crosslinking reaction, and thus the thermal peeling property of the adhesive composition can be effectively improved. Furthermore, a composition having desired adhesive characteristics is easily designed, since no third component such as a thermal crosslinking agent needs to be added.

As a result of the extension of the peelable time, a peeling-easy state continues in a certain period of time when the adhesive is heated for thermal peeling and stood still for a certain time after the termination of heating so that the adhesive is cooled to a temperature lower than the above heating temperature, and thus the article such as an adhesive sheet can be peeled from the adherent. Accordingly, the peeling work of the adhesive sheet on site is greatly facilitated even when the article adhered has a relatively large adherent surface.

Herein, the term "peeling-easy state" is intended to mean a state where the adhesive is heated to a specific temperature (higher than the melting point of the crystalline polymer) and thus a peel strength is decreased to a lower value than that prior to heating, and the adhesive can be peeled without transferring the adhesive onto the adherent.

The photo-crosslinkability of the self-adherent polymer makes it possible to hot melt coat the adhesive composition in the absence of a solvent and to easily form the adhesive layer of the adhesive sheet or a film-form adhesive. That is, the composition prior to photo-crosslinking is hot melt coated and a coating layer can be photo-crosslinked at any desirable time.

Adhesive composition

In the adhesive composition of the present invention, since the self-adherent polymer is compatible with the molten crystalline polymer, it advantageously retards the crystallization of the crystalline polymer melt. The melting and recrystallization of the crystalline polymer in the composition are substantially reversible physical changes (phenomena).

The self-adherent polymer is photo-crosslinkable. The crosslinking of the self-adherent polymer retards the recrystallization and also effectively prevents the transfer of the adhesive components on the adherent in the case of peeling. The wavelength of light used in the photo-crosslinking is not limited, but the light is usually UV rays or electron beams are used.

When the thermally peelable adhesive prepared from the adhesive composition of the present invention contains a relatively large amount of the self-adherent polymer, it has a good pressure-sensitive adhesion property so that it can be adhered by pressing even at room temperature (about 15 to 30°C). In addition, it can be adhered by heat pressing, when the content of the self-adherent polymer is relatively low, or it is adhered to an adherent to which the adhesion of an adhesive is difficult Furthermore, the adhesive composition may be readhered to the adherent while it is not cooled after the thermal peeling.

To achieve the above effects of the present invention, the content of the self-adherent polymer is in the range between 50 and 95 wt. % based on the whole weight of the adhesive composition. When the content of the self-adherent polymer is less than 50 wt. %, the pressure sensitive adhesion property may deteriorate. When this content exceeds 98 wt %, the peelable time may not be extended.

The content of the crystalline polymer is in the range between 1 and 49 wt. % based on the whole weight of the adhesive composition. When the content of the crystalline polymer is less than 1 wt %, the peelable time may not be extended. When this content exceeds 49 wt. %, the pressure sensitive adhesion property may deteriorate.

From the above viewpoints, the content of the self-adherent polymer is preferably from 52 to 95 wt. %, more preferably from 55 to 90 wt %, while the content of the crystalline polymer is preferably from 4 to 47 wt %, more preferably from 9 to 44 wt. %.

In the case of the adhesive article comprising the substrate and the adhesive layer formed from the adhesive composition of the present invention, the thermal peeling property is effectively improved after the crosslinking of the self-adherent polymer. That is, the adhesive article can be adhered to the adherent through the adhesive layer crosslinked, (i) by adhering the adhesive article to the adherent and then photo-crosslinking the self-adherent polymer at a desired time, or (ii) by photo-crosslinking the self-adherent polymer prior to the adhesion of the adhesive article to the adhrent.

The above methods (i) and (ii) can produce a thermal-peeling-easy adhered structure, which comprises the adhesive article and the adherent

In the case of the method (i), for example, the adhesive layer is irradiated with light, and then the adhesive article is heated with a heating means, or the adhesive article is heated while irradiating the adhesive layer with light

The adhesive layer may contain a crosslinking agent which is thermally reactive with the self-adherent polymer (a thermal crosslinking agent). In such a case, after the self-adhering polymer is crosslinked with the thermal crosslinking agent, the adhesive article is adhered to the adherent and then the self-adherent polymer is photo-crosslinked at any desirable time. For example, when the self-adherent polymer has a carboxyl group in the molecule, a bisamide crosslinking agent, an epoxy resin, an isocyanate compound, etc. may be used as the thermal crosslinking agent. When the thermal crosslinking agent is used, its content is usually from 0.01 to 10 wt. %, preferably from 0.05 to 5 wt. %, based on the whole weight of the adhesive.

Crystalline polymer

In general, the crystalline polymer used according to the present invention is a polymer comprising polyol units containing alkylene backbones having 4 to 6 carbon atoms in the molecule. Such polyol units containing the alkylene backbones have a relatively high crystallinity. The polymer comprising the polyol units derived from the crystalline polyol as the repeating units is preferable for improving the thermal peeling property and extending the peelable time. The crystalline polyol units are preferably present in the backbone of the molecule rather than in side chains.

Herein, the term "polyol" is intended to mean a polymer or an oligomer, which is substantially non-tacky at room temperature (about 25°C) and has at least two hydroxyl groups in the molecule.

The term "crystalline" means a property of a polymer to be molten by heating. The melting point of the crystalline polymer depends on the melting point of the polyol contained as the repeating unit. The melting point is usually from 30 to 70°C, preferably from 35 to 65°C, particularly preferably from 40 to 60°C.

The molecular weight of the crystalline polymer is in a range where the desired adhesion force is attained. In general, the crystalline polymer has a weight average molecular weight of from 5,000 to 200,000. Herein the "molecular weight" is a polystyrene-converted molecular weight measured with GPC.

The crystalline polyol described above may be (1) a crystalline polyol such as polyester polyols (e.g. polycaprolactone, etc.), polyether polyols, polycarbonate polyols, and the like, or (2) a crystalline polyurethane prepared by polymerizing a raw material composition containing such a polyol and a diisocyanate compound. These crystalline polymers may be used independently or as a mixture of two or more of them.

The polyol units of the polyurethane described above are formed from the crystalline polyol. That is, the crystalline polyol is incorporated in the urethane molecule through the reaction of the polyol with a isocyanate compound such as a diisocyanate, and thus forms the crystalline polyol units as the repeating units. The crystalline polyol is selected from crystalline polyester polyol, polyether polyol, polycarbonate polyol, etc. A preferred polyester polyol is polycaprolactone from the viewpoint of the easy control of the crystallization (the crystallinity and the crystallization rate) of the polyurethane. From the same viewpoint, another preferred polyether polyol is polytetramethylene glycol. The polyols may be used independently or as a mixture of two or more of them. In general, the crystalline polyol as the raw material of the polyurethane has a weight average molecular weight of from 1,000 to 200,000, preferably from 1,500 to 50,000.

The isocyanate compound is usually a diisocyanate having two isocyanate groups in the molecule. For example, isophorone diisocyanate (IPDI), hydrogenated MDI, 1,6-hexanediol diisocyanate (HDDI), etc. may be used.

One preferable example of the crystalline polymer is polycaprolactone. Polycaprolactone can be used as the crystalline polymer while it may be used as the raw material of the polyurethane as described above.

Polycaprolactone used in the present invention may be (i) one obtained by polymerizing a starting material containing caprolactone, or (ii) one having recurring units obtained by ring opening polymerization of caprolactone.

In the case of a thermally peelable adhesive composition comprising polycaprolactone, it is particularly easy to increase the thermal peeling property and extend the peelable time. Furthermore, the crystallization of polycaprolactone can substantially completely suppress the tackiness at room temperature. On the other hand, the composition can exhibit the desired level of adhesion force by pressing the adhesive composition to the adherent at room temperature. When the higher adhesion force is required, the composition may be heat pressed.

Self-adherent polymer

The self-adherent polymer used in the present invention is a polymer which is tacky at room temperature (about 25°C), and compatible with the crystalline polymer when it is heated to a temperature not lower than the melting point of the crystalline polymer. The self-adherent polymer is crosslinked so that the adhesive composition can be used as the thermally peelable adhesive.

Whether the self-adherent polymer is compatibilized with the crystalline polymer when heated to a temperature not lower than the melting point of the polyol units can be determined with the clarity of the adhesive composition, that is, the change (decrease) of haze.

For example, the transparency of a film adhesive (a film-form adhesive) consisting of the adhesive composition of the present invention and having a thickness of 20 to 60 $\mu$m is compared between the heated state at a temperature not lower than the melting point of the crystalline polymer and the state at a temperature lower than the melting point (for example, room temperature, about 25°C). At room temperature, the crystalline polymer usually forms fine crystals and dispersed in the matrix comprising the self-adherent polymer. Thus, the film adhesive has relatively high transparency, and the haze measured with a color difference meter is 5 % or more (usually 20 % or less). When the crystalline polymer is molten and compatibilized with the self-adherent polymer at a temperature not lower than the melting point of the crystalline polymer, the haze decreases, and the film adhesive becomes substantially transparent If the crystalline polymer is molten but is not compatibilized with the self-adherent polymer, the haze does not substantially change. In such a case, the smaller haze means better compatibility. Accordingly, the haze of the film adhesive measured with the color difference meter is preferably 3 % or less, more preferably 2 % or less, when the polyurethane and the self-adherent polymer are in the compatibilized state.

The compatibility of the crystalline polymer and the self-adherent polymer can be simply judged by the transparency of a solution containing the two polymers. That is, one prerequisite for the good compatibility between the self-adherent polymer and the crystalline polymer is that a transparent mixture forms, when the first solution containing the dissolved self-adherent polymer and the second solution containing the dissolved crystalline polymer are mixed.

Also, the compatibility of the two polymers can be confirmed by checking the transmission of polarized light with a polarization microscope. As is well known, when the polarization axes of a pair of polarizing plates are crossed at right angles, no light passes, so that the view becomes substantially dark.

One pair of polarizing plates, which are arranged so that their polarization axes are crossed at right angles, are observed with inserting the film adhesive made of the adhesive composition of the present invention between them. At room temperature, the fine crystals of the crystalline polymer rotate the polarizing plane of the light entering the film adhesive, and thus the light is allowed to pass through the both polarization plates. Since the directions of the crystal axes are usually random, the crystalline polymer contains the crystals which rotate the polarization plane just 90 degrees to allow the light to pass through the both polarization plates, and also the crystals which hardly allow the light to pass through the polarization plates. As the fine crystals of the crystalline polymer are smaller and better dispersed, they have the larger compatibility with the self-adherent polymer. Accordingly, as the compatibility of the both polymers increases, the crystal size decreases, and thus the entire film in the field of view of the microscope (100 to 200 times magnification) is observed faintly bright. When the compatibility of the polymers is low, the crystal size becomes large, and thus the crystals can be observed as bright spots which are sprinkled on the dark background. When the crystalline polymer is molten and becomes compatible with the self-adherent polymer, the polymer mixture contained in the film adhesive is optically isotropic, and is darker than at room temperature.

Examples of the self-adherent polymer include acrylic polymers, nitrile-butadiene copolymers (NBR, etc.), styrene-butadiene copolymers (SBR, etc.), polyurethane, silicone polymers, etc. The self-adherent polymers may be used singly or in admixture of two or more.

Preferably, the self-adherent polymer has (a) a photo-crosslinkable functional group, (b) a carboxyl group and (c) an alkyl group having 4 to 8 carbon atom, in the molecule. Such a self-adherent polymer has high compatibility with the crystalline polymer comprising the alkylene backbone with 4 to 6 carbon atoms in the molecule, and can effectively increase the thermal peeling property and extend the peelable time.

The photo-crosslinkable functional group (I) is usually derived from an unsaturated compound or an aromatic compound, preferably a functional group derived from an aromatic compound such as benzophenone, vinylbenzene, benzalacetophenone, cinnamilidene, coumarin, stilbene, styrylpiridine, $\alpha$-phenylmaleimide, anthracene, etc. The functional group derived from the aromatic compound can contribute to the increase of the compatibility of the self-adherent polymer with the crystalline polymer, since it has a benzene ring in the molecule. Preferably the functional group is derived from an aromatic ketone such as benzophenone since it can improve the compatibility of the self-adherent polymer with the crystalline polymer and facilitates the crosslinking reaction.

The total content of the repeating units of the functional monomers (a), (b) and (c) is preferably at least 60 mole % based on the whole self-adherent polymer. When this content is less than 60 mole %, the thermal peeling property and the peelable time of the adhesive may not be effectively improved. When the number of the alkyl groups having 4 to 8 carbon atoms is too small, the compression adhesion property (pressure-sensitive adhesion property) may deteriorate at a relatively low temperature. From such a viewpoint, the content of the essential monomer units derived from the functional monomers (a), (b) and (c) is preferably at least 70 mole %, more preferably at least 75 mole %.

The molar ratios of the repeating units of the monomers (a), (b) and (c) are from 0.1 to 5.0 mole %, from 1 to 25 mole % and from 50 to 98 mole %, respectively, of the whole self-adherent polymer. In addition to the essential monomers (a), (b) and (c), the self-adherent polymer may comprise repeating units derived from a monomer copolymerizable with the essential monomers (a), (b) and (c).

One preferred example of the self-adherent acrylic polymer is an acrylic polymer obtained by polymerizing a monomer mixture containing (A) a (meth)acrylic monomer having a photo-crosslinkable functional group derived from an aromatic ketone in the molecule, (B) a (meth)acrylic monomer having a carboxyl group in the molecule and (C) a (meth)acrylic monomer having an alkyl group with 4 to 8 carbon atoms in the molecule. Such a copolymer may be prepared by copolymerizing the monomers by a conventional method such as solution polymerization.

As the monomer (A), an aromatic unsaturated ketone such as acryloyloxybenzophenone, etc. may be used. Examples of the monomer (B) include (meth)acrylic acid, fumaric acid, itaconic acid, etc. may be used. Examples of the monomer (C) include n-butyl (meth)acrylate, isobutyl (meth)acrylate, 2-methylbutyl (meth)acrylate, 2-ethylhexyl (meth) acrylate, isooctyl (meth)acrylate, etc.

In the whole repeating units of the self-adherent polymer, the weight ratio of the repeating units derived from the monomer (A) is usually from 0.1 to 5.0 wt %, preferably from 0.2 to 2.0 wt. %, that of the repeating units derived from the monomer (B) is usually from 1 to 25 wt. %, preferably from 3 to 20 wt. %, and that of the repeating units derived from the monomer (C) is usually from 50 to 98 wt. %, preferably from 60 to 92 wt. %.

In addition to the monomers (A), (B) and (C), the monomer mixture may contain other monomer copolymerizable with the monomers (A), (B) and (C). Examples of the copolymerizable monomer used include methyl (meth)acrylate, hydroxyethyl (meth)acrylate, acrylonitrile, acrylamide, etc. A macromonomer having acrylic linkages may be used as a copolymerizable monomer. The macromonomer may be a compound comprising polyol units having an alkylene backbone with 4 to 6 carbon atoms.

The glass transition temperature Tg of the self-adherent polymer is usually from -50 to 5°C, preferably from -40 to 0°C, more preferably form -30 to -5°C. When Tg of the self-adherent polymer is too high, the adhesion property tends to decrease at a low temperature (lower than 20°C). When Tg is too low, the thermal peeling property may deteriorate.

The molecular weight of the self-adhesive polymer used in the present invention may be in a range where the desired adhesion force is attained, and a weight average molecular weight is from 10,000 to 1,000,000. A tackifier may be used in conjunction with the self-adhesive polymer like the conventional pressure-sensitive adhesive.

Preparation of adhesive composition

The adhesive composition of the present invention may be prepared by uniformly mixing the raw materials by a conventional mixing method. For example, the tackifying polymer, the crystalline polymer, the crosslinking agent, the solvent, etc. are mixed with a mixing apparatus such as a homomixer, a planetary mixer, etc. to homogeneously dissolve or disperse the materials to obtain a liquid composition.

Such a liquid composition can be prepared in the form of a precursor solution containing the tackifying polymer and the crystalline polymer by mixing the first solution comprising the dissolved tackifying polymer and the second solution comprising the crystalline polymer dissolved. Then, the precursor solution is dried to obtain the adhesive layer consisting of the adhesive composition. In such a way, it is possible to form a specific morphology (interlinked structure) of crystalline polycaprolactone and the tackifying polymer having good compatibility with polycaprolactone, and thus the above-described properties (non-tackiness at room temperature and high adhesion force) can be most effectively achieved. When the crosslinking component is added, the third solution comprising the crosslinking component is added to the precursor solution.

The adhesive article comprises a substrate (1) and an adhesive layer (2) provided on at least one main surface of the substrate (1) and is characterized in that the adhesive layer comprises the adhesive composition described above. The self-adherent polymer is preferably crosslinked.

The substrate may be in the form of a sheet or a film, or an electronic part or a mechanical part. Alternatively, a plastic or metal substrate for a sign or a signboard may be used as the substrate of the adhesive article.

For example, the adhesive article may be produced by applying the coating liquid of the adhesive composition, which is prepared as described above, to a suitable material and drying is to form an adhesive layer, and fixing the adhesive layer and the substrate together. For instance, the coating liquid of the adhesive composition is applied to the release surface of a liner and dried to form an adhesive layer. Then, the substrate is laminated and pressed onto the adhesive layer to finish the adhesive article of the present invention. Alternatively, the coating liquid is applied to the surface or surfaces of the substrate and dried to form an adhesive layer, and then a liner is press laminated on the adhesive layer to cover the adherent surface of the adhesive layer. Thereby, the adhesive article is finished.

The release surface of the liner may have minute unevenness. In such a case, the surface (adhesive surface) of the adhesive layer has the unevenness (positive unevenness) through the transfer of the unevenness (negative unevenness) of the release surface of the liner. The unevenness may be arranged on the surface (the adhesion surface or the release surface of the liner) with regularly repeated patterns, or the unevenness may have irregular patterns.

The drying in the process for the formation of the adhesive layer is usually carried out at a temperature of 60 to 180°C. The drying time is usually from several ten seconds to several minutes.

The thickness of the adhesive layer is usually from 5 to 1,000 $\mu$m, preferably from 10 to 500 $\mu$m, in particular from 15 to 100 $\mu$m.

A coating means may be any coating means such as a knife coater, a roll coater, a die coater, a bar coater, etc.

When the adhesive article is an adhesive sheet (or an adhesive film), the substrate may be a paper sheet, a metal film, a polymer film, etc.

Examples of the polymers of the polymer films include polyimide, polyvinyl chloride, acrylic polymers, polyesters (e.g. polyethylene terephthalate, etc.), polyurethane, polyolefin polymers (including ethylene copolymers such as ethylene-acrylic acid copolymers, etc.), and so on. A retroreflective sheet may be used as a substrate.

The substrate may be one allowing visible light or UV rays to transmit therethrough, or a light-reflection one. Also, the substrate may be colored or decorated with printing, etc. In this case, the adhesive sheet of the present invention can be used as a decorative sheet or a marking film.

The thickness of the substrate is usually from 5 to 500 $\mu$m, preferably from 10 to 300 $\mu$m.

The adhesive layer may contain any one of conventional additives, insofar as the effects of the present invention are not impaired. Examples of such additives include viscosity modifiers, defoaming agents, leveling agents, UV ray absorbers, antioxidants, pigments, fungicides, fine particles of tacky polymers or non-tacky rubbery polymers, tackifiers, catalysts to accelerate the crosslinking reaction, etc.

Adhered structure

According to the present invention, a thermally-peeling-easy adhered structure can be readily formed. For example, the adhesive article, which is produced as described above, is adhered to an adherent to obtain the thermally-peeling-easy adhered structure.

When the adhesive article is adhered to an adherent, the adhesion is completed by laminating the adhesive layer of the adhesive article to the adherent and then pressing the laminate under a pressure of 1 to 50 kg/cm$^2$ (about 0.1 to 4.9 MPa). In the course of pressing, the adhesion force may be increased by heating and then cooling (spontaneous cooling).

Examples of the adherent to be used include adherents having the surfaces (adhering surfaces) made of (1) metals such as aluminum, stainless steel, copper, zinc-plated steel, etc., (2) resins such as polyimide, acrylic resins, polyurethane, melamine resins, epoxy resins, vinyl chloride resins, etc., and (3) inorganic oxide materials such as ceramics, etc. Also, adherents having coated surfaces as the adhering surfaces may be used.

When the adhesive article is peeled from the adherent of the adhered structure, it is heated to a specific temperature as described above. Heating is preferably carried out with a heating means which will be explained below.

The peel strength of the adhesive article prior to heating for peeling off is usually larger than 15 N/25 mm, preferably from 16 to 40 N/25 mm, when it is measured by the 180 degrees peeling test at a peeling rate of 300 mm/min. An optimum range of the peel strength in the thermal peeling process can be suitably selected according to the mechanical strength of the substrate (e.g. elastic modulus, elongation at break, etc.), peeling conditions (e.g. peeling rate), and so on. From the viewpoint of quick peeling, the peel strength is preferably 15 N/25 mm or less, when it is measured by the 180 degrees peeling test at a peeling rate of 300 mm/min.

Peeling method of adhesive article

The heating means used to peel the adhesive article adhered to the adherent may be a steam (pressurized steam)-spraying apparatus, an iron, a heat gun (an apparatus for blowing hot or warm air including a drier), a heater (e.g. a stove, a IR heater, etc.), and so on. Using such a heating means, the adhesive article or the adherent is directly heated to allow the adhesive layer become the thermally peeling easy state. A temperature monitor may be used to control the upper limit of the heating temperature. The temperature monitor may be a radiation thermometer, a thermocouple, a heat-discoloring film (i.e. a thermolabel, or a temperature-indicator film), etc.

To peel the adhesive article which has been adhered to the adherent, the adhesive article is heated to a certain heating temperature higher than the melting point of the crystalline polymer in the adhesive layer and then the heating is terminated. Within a specific period of time after terminating heating, the adhesive article is removed. In such a case, the adhesive article is preferably removed after it is allowed to stand until its temperature becomes lower than the heating temperature. More preferably, the adhesive article is removed when its temperature is lowered to 40°C or less after it is allowed to stand still for a certain time from the termination of heating, since a worker does not feel hot if he or she touches the article, and the article is quickly peeled with a hand.

The time period after terminating heating is not limited, and is usually at least several seconds, preferably from 30 seconds to less than 10 minutes, more preferably from 1 to 5 minutes.

The heating temperature is preferably high enough to facilitate the compatibilization of the crystalline polymer and the self-adherent polymer so that the peel strength is effectively lowered. On the other hand, when the heating temperature is too high and the time after the termination of the heating is too short, the adhesive article is broken in the course of peeling, and thus the peeling work may become difficult. Furthermore, when the heating temperature is too high, it takes a long time to cool the adhesive article to a temperature at which a worker can touch the article with a hand and therefore the working efficiency tends to decrease. From such a viewpoint, the heating temperature is preferably at least 5 degrees (in Celcius) higher than the melting point of the crystalline polymer and does not exceed 130°C [i.e. from (melting point + 5°C) to 130°C], more preferably, it is at least 15 degrees higher than the melting point of the crystalline polymer and does not exceed 120°C.

After terminating heating, the adhered structure is kept standing until the temperature becomes lower than the heating temperature. Thereby, the adhesive article is cooled to a temperature at which the worker can touch it, and thus, the adhesive article can be peeled quickly so that the working efficiency increases.

EXAMPLES

The present invention will be illustrated by the examples.

Examples 1-3

1. Preparation of self-adherent polymer

A self adhesive polymer used in each Example (SAP1, SAP2 and SAP3) was prepared as follows:

A monomer mixture having the following monomer composition was solution polymerized:

Self-adhesive polymer 1 (SAP1)

A monomer mixture contained 90 wt. parts of 2-methylbutyl acrylate, 0.3 wt. part of 4-acryloyloxybenzo-phenone, and 10 wt. parts of acrylic acid. A solvent was ethyl acetate, and the solution of the self-adherent polymer obtained had a solid concentration of 30 wt. %. The weight average molecular weight (Mw) of the self-adherent polymer was 240,000.

Self-adhesive polymer 2 (SAP2)

A monomer mixture contained 90 wt parts of isooctyl acrylate, 0.4 wt. part of 4-acryloyloxybenzophenone, and 10 wt. parts of acrylic acid. A solvent was ethyl acetate, and the solution of the self-adherent polymer obtained had a solid concentration of 30 wt. %. The weight average molecular weight (Mw) of the self-adherent polymer was 330,000.

Self-adhesive polymer 3 (SAP3)

A monomer mixture contained 70 wt. parts of isooctyl acrylate, 22 wt. parts of methyl acrylate, 0.4 wt. part of 4-acryloyloxybenzophenone, and 8 wt. parts of acrylic acid. A solvent was ethyl acetate, and the solution of the self-adherent polymer obtained had a solid concentration of 30 wt. %. The weight average molecular weight (Mw) of the self-adherent polymer was 220,000.

2. Crystalline polymer

As a crystalline polymer, polycaprolactone manufactured by Daicel Chemical Industries (PLACCEL® 220; Mw = 5,700, Mw/Mn = 2.0) was used. Using the toluene solution of the polycaprolactone (non-volatile content of 21 wt. %), an adhesive composition solution was prepared as described below.

The melting point of the crystalline polymer was determined from the peak temperature in a chart, which was depicted using a differential scanning calorimeter of Perkin-Elmer (DSC-2CC) with heating the sample from -60°C to 180°C at a heating rate of 10°C/min.

### 3. Preparation of adhesive composition solution

The solution of the self-adherent polymer and the solution of the crystalline polymer, which were prepared in the above, were mixed so that the weight ratio of the non-volatile components was 90:10 to obtain an adhesive composition solution (hereinafter, sometimes referred to as "adhesive solution"). The adhesive solution of each Example was transparent.

The kind of the self-adhesive polymer used in each Example was shown in Table 1 below.

### 4. Production of adhesive sheet

Each adhesive solution was applied on the release surface of a liner with a knife coater and dried at 90°C for 5 minutes to form an adhesive layer of each adhesive composition prior to crosslinking, which had a thickness of 30 $\mu$m. The adhesive layer was irradiated with UV ray to photo-crosslink the self-adherent polymer. Thus, the adhesive layer containing the crosslinked self-adherent polymer was formed. The UV ray-irradiating apparatus was an EYE-UV curing apparatus of EYE Graphics (US05-06002), and a light source was a high pressure mercury lamp and an irradiation energy was 240 mJ/cm$^2$.

Over the adhesive layer crosslinked, a substrate made of the film of polyolefin modified with an ethylene-vinyl acetate copolymer having a thickness of 80 $\mu$m was dry laminated to obtain an adhesive sheet (having the adhesive layer on one surface) of each Example.

### 5. Evaluation

#### (1) Initial adhesion force

The adhesive sheet of each Example was cut to a size of 200 mm x 25 mm and adhered to a stoved melamine coated plate (available from PALTEC) as an adherent at 20°C with a press roll to obtain an adhered structure of each Example according to JIS Z 0237 8.2.3. to obtain a sample. After the completion of adhesion, the sample was kept standing at the same temperature for 48 hours. Then, a 180 degree peel strength was measured with a TENSILON at a peeling rate of 300 mm/min. without heating. The results are shown in Table 1.

#### (2) Thermal peel strength

The sample and the substrate were heated with an industrial drier (PHG 600CE manufactured by BOSCH) for about 10 seconds to about 110°C. After terminating heating, they were allowed to cool at room temperature (about 20°C) for 2 minutes. Then, the peel strength (thermal peel strength) was measured in the same manner as in the measurement of the initial adhesion force with TENSILON. In each Example, the temperature of the adhesive sheet was about 37°C after 2 minutes from the termination of heating. The results are shown in Table 1.

#### (3) Retention of adhesion force

The retention of adhesion force of the sample of Example 1 and that of Comparative Example 1, which is described below, was calculated according to the following formula:

$$\text{Retention of adhesion force (\%)} =$$
$$100 \times (\text{Peel strength at each temperature})/(\text{initial adhesion force})$$

The results are shown in Fig. 1.

The temperature in the graph of Fig. 1 was that of the adhesive sheet measured with a radiation thermometer (DUALTHERMO® AR-150 manufactured by ANRITSU INSTRUMENT).

#### (4) Removal cleanliness

After the thermal peeling test (2), when the residues of the components were observed on the surface of the adherent, it was marked "adhesive transferred", while when no residues were observed, it was marked "no adhesive transferred". The results are shown in Table 1.

Comparative Examples 1-3

An adhesive sheet of each of Comparative Examples 1-3 was produced in the same manner as in Examples 1-3, respectively, except that no crystalline polymer was used, and the properties were evaluated. The results are shown in Table 1.

All the adhesive compositions of Comparative Examples had no thermal peeling property, since they contained no crystalline polymer.

Table 1

|  | Self-adherent polymer | Crystal-line polymer | Initial adhesion force (N/25mm) | Thermal peel strength (N/25mm) | Removal cleanliness |
|---|---|---|---|---|---|
| Ex. 1 | SAP1 | Polyvapro-Lactone | 22 | 12 | No adhesive transferred |
| Ex. 2 | SAP2 | Polycapro-Lactone | 23 | 15 | No adhesive transferred |
| Ex. 3 | SAP3 | Polycapro-Lactone | 24 | 10 | No adhesive transferred |
| C.E. 1 | SAP1 | Polycapro-Lactone | 22 | 22 | Adhesive transferred |
| C.E. 2 | SAP2 | Polycapro-Lactone | 24 | 24 | Adhesive transferred |
| C.E. 3 | SAP3 | Polycapro-Lactone | 26 | 25 | Adhesive transferred |

**Claims**

1.  An adhesive composition comprising (I) a crystalline polymer and (II) a self-adherent polymer compatible with said crystalline polymer at a temperature equal to or higher than the melting point of said crystalline polymer **characterized in that** said self-adherent polymer has (a) a photo-crosslinkable functional group, (b) a carboxyl group and (c) an alkyl group having 4 to 8 carbon atoms in the molecule.

2.  The adhesive composition according to claim 1 wherein said self-adherent polymer is crosslinked through said photo-crosslinkable functional group in the molecule.

3.  The adhesive composition of claim 1, wherein the crystalline polymer is a polyester polyol, a polyether polyol, or a polycarbonate polyol.

4.  The adhesive composition of claim 1, wherein the polyester polyol is a polycaprolactone.

5.  The adhesive composition of claim 1, the crystalline polymer having a melting point of from 30 to 70°C.

6.  The adhesive composition of claim 1, the self-adherent polymer having a Tg of from -50 to 5°C.

7.  The adhesive composition of claim 1, wherein relative to the whole weight of the adhesive composition, the crystalline polymer is present in an amount between 1 and 49 wt.-% and the self-adherent polymer is present in an amount between 50 and 95 wt.-%.

8.  An adhesive article comprising a substrate and an adhesive layer provided on at least one of the main surfaces of said substrate, wherein said adhesive layer comprises an adhesive composition according to any of claims 1 to 7.

9.  An adhered structure comprising the adhesive article of claim 8 and an adherent having a surface made of a metal, resin, or inorganic oxide material.

**Patentansprüche**

1. Klebstoffzusammensetzung umfassend (I) ein kristallines Polymer und (II) ein selbstklebendes Polymer, das mit dem kristallinen Polymer bei einer Temperatur gleich dem oder höher als der Schmelzpunkt des kristallinen Polymers kompatibel ist, **dadurch gekennzeichnet, dass** das selbstklebende Polymer (a) eine photovernetzbare funktionelle Gruppe, (b) eine Carboxygruppe und (c) eine Alkylgruppe mit 4 bis 8 Kohlenstoffatomen im Molekül aufweist.

2. Klebstoffzusammensetzung nach Anspruch 1, wobei das selbstklebende Polymer durch die photovernetzbare Gruppe im Molekül vernetzt ist.

3. Klebstoffzusammensetzung nach Anspruch 1, wobei das kristalline Polymer ein Polyesterpolyol, ein Polyetherpolyol oder ein Polycarbonatpolyol ist.

4. Klebstoffzusammensetzung nach Anspruch 1, wobei das Polyesterpolyol ein Polycaprolacton ist.

5. Klebstoffzusammensetzung nach Anspruch 1, wobei das kristalline Polymer einen Schmelzpunkt von 30 bis 70 °C aufweist.

6. Klebstoffzusammensetzung nach Anspruch 1, wobei das selbstklebende Polymer eine Tg von -50 bis 5 °C aufweist.

7. Klebstoffzusammensetzung nach Anspruch 1, wobei das kristalline Polymer in Bezug auf das Gesamtgewicht der Klebstoffzusammensetzung in einer Menge zwischen 1 und 49 Gew.-% und das selbstklebende Polymer in einer Menge zwischen 50 und 95 Gew.-% vorliegt.

8. Klebegegenstand umfassend ein Substrat und eine Klebstoffschicht, die auf mindestens einer der Hauptoberflächen des Substrats bereitgestellt ist, wobei die Klebstoffschicht eine Klebstoffzusammensetzung nach einem der Ansprüche 1 bis 7 umfasst.

9. Haftende Struktur umfassend den Klebegegenstand nach Anspruch 8 und einen haftenden Gegenstand mit einer aus Metall, Harz oder einem anorganischen Oxidmaterial bestehenden Oberfläche.

**Revendications**

1. Composition adhésive comprenant (I) un polymère cristallin et (II) un polymère auto-adhésif compatible avec ledit polymère cristallin à une température supérieure ou égale au point de fusion dudit polymère cristallin, **caractérisée en ce que** ledit polymère auto-adhésif comporte (a) un groupe fonctionnel photo-réticulable, (b) un groupe carboxyle, et (c) un groupe alkyle comportant de 4 à 8 atomes de carbone dans la molécule.

2. Composition adhésive selon la revendication 1, dans laquelle ledit polymère auto-adhésif est réticulé via ledit groupe fonctionnel photo-réticulable dans la molécule.

3. Composition adhésive selon la revendication 1, dans laquelle le polymère cristallin est un polyester polyol, un polyéther polyol, ou un polycarbonate polyol.

4. Composition adhésive selon la revendication 1, dans laquelle le polyester polyol est une polycaprolactone.

5. Composition adhésive selon la revendication 1, le polymère cristallin ayant un point de fusion de 30 à 70 $\underline{o}$C.

6. Composition adhésive selon la revendication 1, le polymère auto-adhésif ayant une $T_g$ de -50 à 5 $\underline{o}$C.

7. Composition adhésive selon la revendication 1, dans laquelle, par rapport au poids total de la composition adhésive, le polymère cristallin est présent dans une quantité entre 1 et 49 % en poids, et le polymère auto-adhésif est présent dans une quantité entre 50 et 95 % en poids.

8. Article adhésif comprenant un substrat et une couche adhésive présente sur au moins l'une des surfaces principales dudit substrat, dans lequel ladite couche adhésive comprend une composition adhésive selon l'une quelconque des revendications 1 à 7.

9. Structure adhérée comprenant l'article adhésif selon la revendication 8 et une partie adhérée comportant une surface constituée d'un métal, d'une résine, ou d'un matériau qui est un oxyde inorganique.

*Fig. 1*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4737559 A
- US 4847137 A
- US 5552451 A
- US 5648425 A
- US 5192612 A
- JP 3021646 B
- JP 2000119624 A
- US 5412035 A
- JP 6510548 A
- US 0506002 A